# EUROPEAN PATENT APPLICATION

(11) **EP 1 746 817 A2**
(43) Date of publication of application: **24.01.2007**
(21) Application number: 06117179.9
(22) Date of filing: 13.07.2006
(51) Int. Cl.: H04N 5/00

(54) **Media interfacing**

(30) Priority: 22.07.2005 KR 20060066842
(71) Applicant: SAMSUNG ELECTRONICS CO., LTD., Suwon-City, Kyungki-do (KR)
(72) Inventor: Lee, Chag-jin, Suwon-si, Gyeonggi-do (KR)
(74) Representative: Derry, Paul Stefan

(57) **Abstract**

A media play system comprises a media player and a media interface in which a signal is transmitted from an external source to the media player. The media interface includes a cable to transmit the signal, and a memory to store cable information about characteristics of the cable. The media player includes a connection unit connected to the cable, a signal processor that processes a signal input through the connection unit, and a controller that processes the input signal through the connection unit in accordance with the cable information. Thus, a signal is optimally processed according to characteristics of a connection cable.

## Description

The present invention relates to a media player, a media play system, a media interface, and a method of controlling a media player

A conventional display apparatus, which displays an image based on a received video signal, generally employs a connection cable to receive the video signal from a signal source. The connection cable is designed variously according to a type of transmission signal. The connection cable length is also variously provided. For example, a high definition multimedia interface (HDMI) cable can have a length of 7m or more. Noise is generated according to design characteristics of the cable. An example cable type is a star cable.

A display apparatus processes a signal transmitted through the connection cable, thereby displaying an image. Consequently, a signal processing operation is performed to compensate degradation such as signal loss and signal weakening generated in the connection cable. Here, the display apparatus processes the received signal in accordance with a register value related to the compensation required.

The register value related to the noise compensation is set by a designer while the display apparatus is produced. The designer sets the register value to an optimal value to connection cables, while the display apparatus is developed. That is, the designer tests noise in many cables, thereby setting an optimal register value in which good signal compensation can be achieved.

However, when a user does not use the optimal connection cable, , but instead uses a connection cable having different characteristics, signal degradation may not be correctly compensated for. For example, when a user uses the connection cable having a length longer or shorter than 7m, although a predetermined length under a condition that the register value is set to the connection cable having a length of 7m, an imperfect signal is likely to result even after compensation.

Accordingly, there is a need for an improved method for processing a signal in a connection cable in a media play system, according to the connection cable characteristics.

An aspect of the present invention is to address at least the above problems and/or disadvantages and to provide at least the advantages described below. Accordingly, an aspect of the present invention is to provide a media player, a control method thereof, and a media play system including the same, in which a signal is optimally processed according to characteristics of a connection cable.

The foregoing and/or other aspects of the present invention can be achieved by providing a media play system comprising a media player and a media interface which a signal is transmitted from an external source to the media player. The media interface includes a cable to transmit the signal, and a memory to store cable information about characteristics of the cable. The media player includes a connection unit, which the cable is connected to, a signal processor that processes a signal input through the connection unit, and a controller that processes the input signal through the connection unit on the basis of the cable information.

The cable information may include information about at least one of length, impedance or capacitance of the cable.

The media player may comprise a register to process noise of the signal. The controller may determine an optimal register value for the noise process according to the characteristics of the cable by reading the cable information, and control the signal processor to process the noise of the signal input through the connection unit on the basis of the optimal register value.

The signal processor may comprise a transition minimised differential signalling (TMDS) receiver.

Aspects of the present invention can be achieved by providing a media player comprising a connection unit, which a media interface cable is connected to, for transmitting a signal from an external source. The media player may include a signal processor to process a signal input through the connection unit. A controller may read cable information about characteristics of the media interface cable from a memory provided in the media interface cable, where the media interface cable is connected to the connection unit, and control the signal processor to process the input signal in accordance with the cable information.

The cable information may include information about at least one of the length, the impedance or the capacitance of the media interface cable.

The media player may further comprise a register to process noise of the signal, wherein at least one of the MCU or the CPU determines an optimal register value according to the characteristics of the media interface cable by reading the cable information from the memory, and control the TMDS receiver to process the noise of the input signal in accordance with the optimal register value.

Aspects of the present invention can be achieved by providing a method of controlling a media player including a connection unit, which an HDMI cable is connected to, for transmitting a signal from an external source to a media player. The method may include an optimal register value determined for processing noise of a signal according to characteristics of the HDMI cable by reading information about at least one of length, impedance or capacitance of the HDMI cable from a predetermined memory provided in the HDMI cable, where the HDMI cable is connected to the connection unit; and processing the noise of the signal received through the connection unit on the basis of the optimal register value.

Embodiments of the present invention will now be described, by way of example only, with reference to the accompanying drawings, in which:
Figure 1 is a control block diagram of a display apparatus and a system thereof according to the present invention;
Figure 2 is a control block diagram of a display apparatus and a system thereof according to the present invention; and
Figure 3 is a control flowchart of the display apparatus according to the present invention.

Throughout the drawings, like reference numerals refer to like elements, features, and structures.

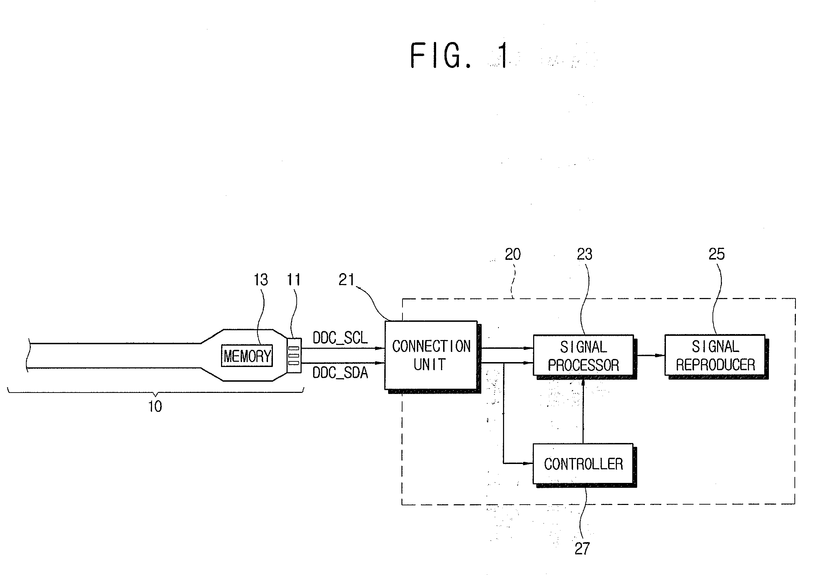

Figure 1 is a control block diagram of a display apparatus and system according to the present invention.

As shown in Figure 1, a display system includes a connection cable 10 through which a signal is transmitted from an external source (not shown) to a display apparatus 20. The display apparatus 20 displays an image resulting from processing of the transmitted signal.

The connection cable 10 includes a connector (not shown) to be connected to a signal output port of the external source and a connection unit (that is, signal input port) 21 of the display apparatus 20; a signal transmission line (not shown) through which the signal output from the external source is transmitted, and a memory 13 storing information, hereafter cable information, which identifies characteristics of the connection cable 10.

Here, the cable information stored in the memory 13 includes length, impedance and/or capacitance of the connection cable 10, and can be stored when the connection cable 10 is produced. The memory 13 includes an erasable programmable read only memory (EPROM) or an electrical erasable programmable read only memory (EEPROM). Here, the connection cable 10 is designed variously according to the type of transmission signal.

The display apparatus 20 includes the connection unit 21 connected to the connector 11 of the connection cable 10; a signal processor 23 that processes the transmitted received signal; a signal reproducer 25 that reproduces a picture and/or a sound based on the processed signal; and a controller 27.

The connection unit 21 is connected with the connection cable 10, and receives video signals corresponding to various external sources. For example, the connection unit 21 includes input terminals for a composite video baseband signal (CVBS), S-video signal, component signal, personal computer (PC) signal, digital video/visual interactive (DVI) signal, and a high-definition multimedia interface (HDMI) signal.

The signal processor 23 includes a video processor to process a video signal received through the connection unit 21, and an audio processor to process an audio signal received through the connection unit 21. The signal reproducer 25 includes a display unit to display a picture based on the video signal, and a speaker unit to output a sound based on the audio signal. Further, the signal processor 23 includes an equalisation circuit to compensate loss in signal transmission.

Here, the video processor processes the received video signal to have a format suitable for the display unit. The video processor includes various signal processing integrated chips (IC) such as a colour signal separator, analogue-digital converter (ADC), transition minimised differential signalling (TMDS) receiver, video decoder, de-interlacer, scaler, and picture-quality enhancer.

When the connection unit 21 is connected with the connection cable 10, the controller 27 reads cable information from the memory 13 provided in the connection cable 10, and controls the signal processor 23 to process the received signal according to characteristics of the cable. Here, the controller 27 may be a microcomputer or a CPU.

The transmitted signal is weakened in the connection cable 10, so it is advantageous to compensate loss in amplification or noise process. Therefore, the controller 27 determines signal enhancement according to the length of the connection cable 10, and controls the equalisation circuit of the signal processor 23 to variously apply loss compensation such as the amplification, noise process, or the like, to the received signal in consideration of each connection cable 10. Thus, the noise process is varied corresponding to the connection cable 10, so that the display apparatus can secure a reproducing condition according to the connection cable 10.

The display apparatus 20 includes a register for the noise process. The controller 27 reads the cable information from the memory 13 of the connection cable 10, and determines an optimal register value to the noise process, thereby setting the register value. Then, the signal processor 23 processes the signal on the basis of the set register value. These operations will be described in more detail below.

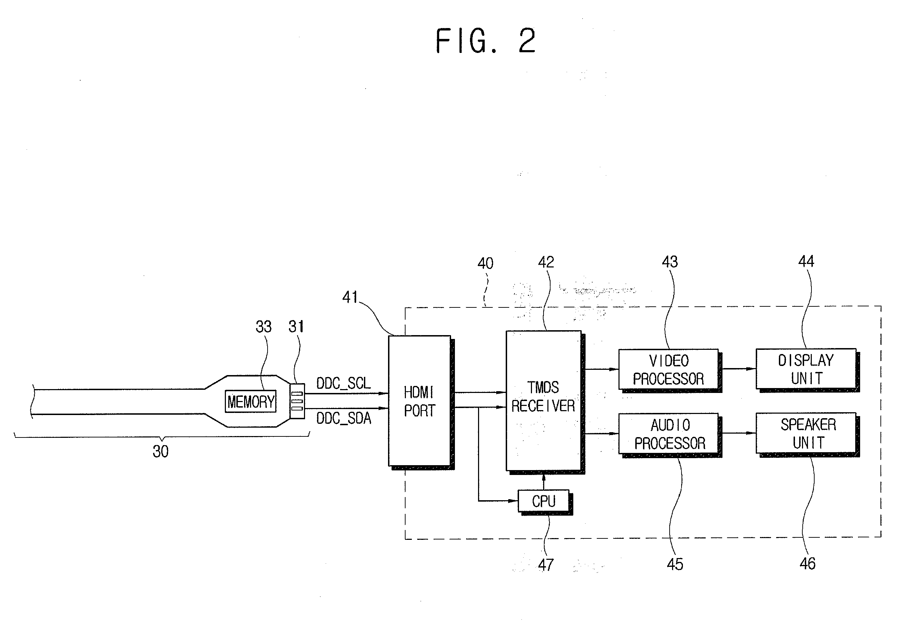

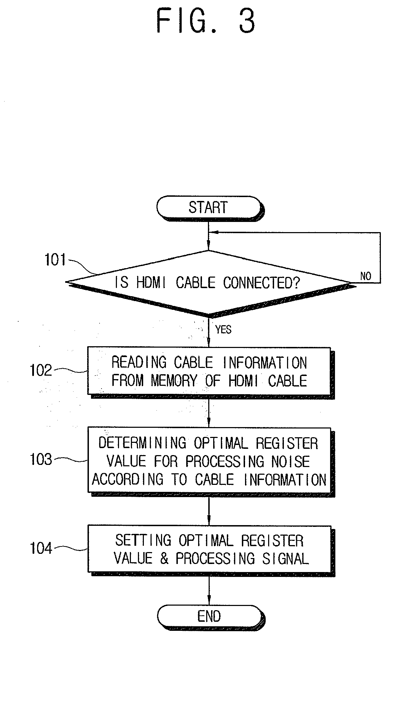

A display apparatus 40 and its system will be described with reference to Figures 2 and 3, and repetitive descriptions will be avoided for clarity and conciseness.

As shown in Figure 2, the display system includes an HDMI cable 30 through which an HDMI signal is transmitted from an external source, and a display apparatus 40 to process and reproduce the HDMI signal.

The HDMI cable 30 transmits a TMDS digital signal from the external source to the display apparatus 40. Here, the HDMI cable 30 includes a memory 33 to store cable information such as length, inductance, and capacitance of the HDMI cable 30. As described above, the cable information stored in the memory 33 is varied according to characteristics of the cable. Here, the HDMI standards allow appendix data, a video signal, audio signal, and control signal to be transmitted through one cable during a blanking period. For example, the HDMI cable 30 transmits clock and data through a DDC_SCL line and a DDC_SDA line.

The display apparatus 40 includes an HDMI port 41 connected to the HDMI cable 30; a TMDS receiver 42 that processes the HDMI signal by separating the TMDS receiver into the video signal, the audio signal and control signal; a video processor 43 and audio processor 45 that processes the separated video and audio signals to output standards of a display unit 44 and a speaker unit 45; and a central processing unit (CPU) 47.

Here, the TMDS receiver 42 decodes the signal, which is converted to have a TMDS format by a TMDS transmitter of the external source, to be separated into the video signal, audio signal and control signal. The TMDS receiver 42 includes a signal converting chipset. The TMDS receiver 42 includes an equalisation circuit to compensate loss in signal transmission, for example, to compensate signal weakening and noise generation.

Further, the CPU 47 reads the cable information from the memory 33 of the HDMI cable 30 connected to the HDMI port 41 through I2C communication, and controls the TMDS receiver 42 to compensate the signal loss such as noise on the basis of the read cable information. Thus, the signal processing for compensating signal loss is varied according to the characteristics of the cable, thereby sufficiently considering the noise generation.

The display apparatus 40 includes the register to process the noise. The CPU 47 reads the cable information, thereby searching an optimal register value corresponding to the characteristics of the cable. At this time, the CPU 47 may include an operation program to search the optimal register value, and may refer to a data table for searching the optimal register value as necessary.

For example, the CPU 47 can set '0×C3' as the optimal register value for the connection cable having a length of 7m and more, and set '0×C1' as the optimal register value for the connection cable having a length of 5m and less.

Accordingly, the register value is set in order to more sensitively process the signal amplification and noise compensation as the length of the connection cable increases.

Here, the CPU 47 can be replaced by a micro controller unit (MCU) of the TMDS receiver 42.

Below, the operations of the display apparatus 40 will be described with reference to Figure 3.

As shown in Figure 3, at operation 101, the HDMI cable 30 is connected to the HDMI port 41. At operation 102, the CPU 47 reads the cable information from the memory 33 of the HDMI cable 30 through the I2C communication.

At operation 103, the optimal register value for the noise process is determined according the read cable information. At operation 104, the optimal register value is set, and the CPU 47 controls the TMDS receiver 42 to process the received signal on the basis of the set optimal register value.

Thus, the display apparatus 40 performs the equalisation process according to the characteristics of the cable.

In the foregoing embodiments, the present invention is applied to the HDMI cable by way of example, but the invention is not limited thereto. Alternatively, the present invention may be applied to a DVI cable or other interface cables, and a corresponding signal reproducer.

As described above, the present invention provides a media player, a control method thereof, and a media play system including the same, in which a signal is optimally processed according to characteristics of a connection cable.

While the invention has been shown and described with reference to certain embodiments, it will be understood by those skilled in the art that various changes in form and details may be made therein without departing from the scope of the invention as defined by the appended claims.

## Claims

1. A media player comprising a connection unit for receiving a signal from an external source through a media interface cable, the media player comprising:
a signal processor for processing a signal input through the connection unit; and
a controller for reading cable information about characteristics of a media interface cable connected to the connection unit from the media interface cable, and controlling the signal processor to process the input signal in accordance with the cable information.

2. A media play system comprising a media player and a media interface in which a signal is transmitted from an external source to the media player, the media interface comprising:
a cable in for transmitting the signal, and
a memory for storing cable information comprising information concerning characteristics of the cable, and the media player comprising:
a connection unit connected to the cable,
a signal processor for processing a signal input through the connection unit, and
a controller for processing the input signal through the connection unit in accordance with the cable information.

3. Apparatus according to any preceding claim, wherein the cable information comprises information about at least one of length, impedance and capacitance of the cable.

4. Apparatus according to any preceding claim, wherein the media player comprises a register arranged to store a register value used to process the signal input through the connection unit; and
wherein the controller is operable to determine an optimal register value for processing the signal input through the connection unit according to the characteristics of the cable by reading the cable information, and to control the signal processor to process the signal input through the connection unit in accordance with the optimal register value.

5. Apparatus according to claim 4, wherein the signal processor comprises a transition minimised differential signalling (TMDS) receiver.

6. Apparatus according to claim 5, wherein the media interface comprises a high-definition multimedia interface (HDMI) cable.

7. Apparatus according to claim 6, wherein the controller comprises at least one of a micro controller unit (MCU) and a central processing unit (CPU).

8. Apparatus according to claim 6, wherein the controller comprises a micro controller unit provided in the TMDS receiver.

9. Apparatus according to claim 7, wherein the MCU or the CPU reads the cable information from the memory through I2C communication.

10. Apparatus according to claim 9, wherein the memory comprises an electrical erasable programmable read only memory (EEPROM).

11. A media interface comprising:
a cable in for transmitting a signal, and
a memory for storing cable information comprising information concerning characteristics of the cable.

12. Apparatus according to claim 11, wherein the memory comprises an electrical erasable programmable read only memory (EEPROM).

13. A method of controlling a media player having a connection unit connected to a cable of a media interface, the cable carrying a signal from an external source to the media player, the method comprising:
processing a signal input through the connection unit in accordance with cable information comprising information concerning characteristics of the cable received from a memory in the media interface.
